# EUROPÄISCHE PATENTSCHRIFT

(11) **EP 3 565 757 B1**
(45) Veröffentlichungstag und Bekanntmachung des Hinweises auf die Patenterteilung: **07.07.2021**
(21) Anmeldenummer: 17809287.0
(22) Anmeldetag: 05.12.2017
(51) Int. Cl.: B62D 15/02

(54) **STEUEREINHEIT UND VERFAHREN ZUR BEREITSTELLUNG EINES KORREKTURZUGS FÜR EIN RÜCKFAHRASSISTENZSYSTEM**
CONTROL UNIT AND METHOD FOR PROVIDING A CORRECTION MOVE FOR A REVERSE PARKING ASSISTANCE SYSTEM
UNITÉ DE COMMANDE ET PROCÉDÉ PERMETTANT DE METTRE À DISPOSITION UNE MAN UVRE DE CORRECTION POUR UN SYSTÈME D'AIDE À LA MARCHE ARRIÈRE

(30) Priorität: 09.01.2017 DE 102017200216
(43) Veröffentlichungstag der Anmeldung: 13.11.2019
(73) Patentinhaber: Bayerische Motoren Werke Aktiengesellschaft, 80809 München (DE)
(72) Erfinder: EBNER, Adrian, 80804 München (DE); STRÖBEL, Michael, 80997 München (DE)
(86) Internationale Anmeldenummer: PCT/EP2017/081539
(87) Internationale Veröffentlichungsnummer: WO 2018/127342

(56) Entgegenhaltungen:
- CN-A- 105 197 010
- DE-A1-102010 030 208

## Beschreibung

Die Erfindung betrifft ein Verfahren und eine entsprechende Steuereinheit für ein Rückfahrassistenzsystem eines mehrspurigen Kraftfahrzeugs.

Ein Fahrzeug, insbesondere ein Straßenkraftfahrzeug, kann ein oder mehrere Fahrerassistenzsysteme, FAS, umfassen, bei denen eine automatische Querführung des Fahrzeugs erfolgt. Beispielsweise kann bei einem sogenannten Rückfahrassistenzsystem das Fahrzeug eine Trajektorie speichern, mit der das Fahrzeug in Vorwärtsrichtung an eine bestimmte Position (z.B. in eine bestimmte Parklücke) gefahren ist. Das Rückfahrassistenzsystem kann dann einen Fahrer dabei unterstützen wieder in Rückwärtsrichtung entlang der gespeicherten Trajektorie von der bestimmten Position wegzufahren (z.B. aus der Parklücke herauszufahren). Die Lenkeingriffe erfolgen dabei autonom durch das Fahrzeug, während der Fahrer des Fahrzeugs typischerweise die Längsbewegung des Fahrzeugs steuert. DE 10 2010 030208 A1 beschreibt eine Steuereinheit für ein Rückfahrassistenzsystem eines Fahrzeugs; wobei die Steuereinheit eingerichtet ist,- auf Basis von Referenzdaten in Bezug auf eine erste Vorwärtsfahrt des Fahrzeugs eine Rückfahr-Trajektorie für eine Rückwärtsfahrt von einer Endposition bis zu einer Anfangsposition zu ermitteln;-eine Lenkvorrichtung des Fahrzeugs bei der Rückwärtsfahrt des Fahrzeugs in Abhängigkeit von der Rückfahr-Trajektorie zu steuern; CN 105 197 010 A beschreibt ein Parkassistenzsystem.

Je nach Trajektorie, die bei der Fahrt in Vorwärtsrichtung gespeichert wurde, kann die assistierte Rückwärtsfahrt ggf. nur mit einer relativ niedrigen Fahrgeschwindigkeit durchgeführt werden. Fährt der Fahrer des Fahrzeugs bei der Rückwärtsfahrt zu schnell, so weicht das Fahrzeug von der vorgegebenen Trajektorie ab und es kommt typischerweise zu einem Abbruch des Rückfahrassistenzsystems. Als Folge daraus ist das Rückfahrassistenzsystem nicht mehr für die weitere Rückwärtsfahrt verfügbar.

Das vorliegende Dokument befasst sich mit der technischen Aufgabe, die Verfügbarkeit eines Rückfahrassistenzsystems zu erhöhen.

Die Aufgabe wird durch die unabhängigen Ansprüche gelöst. Vorteilhafte Ausführungsformen werden u.a. in den abhängigen Ansprüchen beschrieben.

Gemäß einem Aspekt wird eine Steuereinheit für ein Rückfahrassistenzsystem eines Fahrzeugs, insbesondere eines mehrspurigen Straßenkraftfahrzeugs, beschrieben. Die Steuereinheit kann eingerichtet sein, Referenzdaten in Bezug auf eine erste Vorwärtsfahrt des Fahrzeugs zu ermitteln, wobei die Referenzdaten eine Referenz-Trajektorie des Fahrzeugs für die erste Vorwärtsfahrt von einer Anfangsposition bis zu einer Endposition anzeigen. Die Referenzdaten können auf einer Speichereinheit des Fahrzeugs gespeichert werden. Die Speichereinheit kann eingerichtet sein, Referenzdaten für eine Referenz-Trajektorie über eine bestimmte Nenndistanz (z.B. von 50 Metern) zu speichern.

Die Referenzdaten können z.B. Positionsinformation in Bezug auf eine Vielzahl von Positionen auf der Referenz-Trajektorie umfassen. Die Positionsinformation für eine Position kann z.B. Koordinaten der Position anzeigen. Des Weiteren können die Referenzdaten Orientierungsinformation in Bezug auf eine Orientierung des Fahrzeugs an der Vielzahl von Positionen umfassen. Alternativ oder ergänzend können die Referenzdaten Krümmungsinformation in Bezug auf die Krümmung einer Vielzahl von Segmenten der Referenz-Trajektorie umfassen. Somit kann anhand der Referenzdaten in präziser Weise die Referenz-Trajektorie von der Anfangsposition bis zu der Endposition angezeigt werden.

Die Steuereinheit ist weiter eingerichtet, auf Basis der Referenzdaten eine Rückfahr-Trajektorie für eine Rückwärtsfahrt von der Endposition bis zu der Anfangsposition zu ermitteln. Eine Lenkvorrichtung des Fahrzeugs kann dann im Rahmen des Rückfahrassistenzsystems bei der Rückwärtsfahrt des Fahrzeugs in Abhängigkeit von der Rückfahr-Trajektorie gesteuert werden. Insbesondere kann die Lenkvorrichtung des Fahrzeugs bei der Rückwärtsfahrt in automatischer Weise derart angesteuert werden, dass das Fahrzeug entlang der Rückfahr-Trajektorie von der Endposition zu der Anfangsposition zurückgeführt wird. Die Fahrgeschwindigkeit des Fahrzeugs kann während der Rückwärtsfahrt durch den Fahrer des Fahrzeugs gesteuert werden. Mit anderen Worten, bei der Rückwärtsfahrt erfolgt die Längsführung des Fahrzeugs zumindest teilweise manuell bzw. eigenständig durch den Fahrer des Fahrzeugs (z.B. durch Betätigung eines Fahrpedals des Fahrzeugs).

Außerdem ist die Steuereinheit eingerichtet, zu detektieren oder zu bestimmen, dass das Fahrzeug auf der (durch das Rückfahrassistenzsystem assistierten) Rückwärtsfahrt die Rückfahr-Trajektorie verlässt. Dies kann z.B. dadurch verursacht werden, dass der Fahrer des Fahrzeugs eine zu hohe Fahrgeschwindigkeit einstellt. Während der Rückwärtsfahrt kann wiederholt, insbesondere periodisch (z.B. jede Sekunde), überprüft werden, ob das Fahrzeug auf der Rückwärtsfahrt die Rückfahr-Trajektorie verlässt.

Insbesondere kann die Steuereinheit eingerichtet sein, einen Abstand einer aktuellen oder einer prädizierten Position des Fahrzeugs von der Rückfahr-Trajektorie zu ermitteln. Beispielsweise kann prädiziert werden, dass sich das Fahrzeug bei Beibehaltung der Fahrgeschwindigkeit zu einem bestimmten vorausliegenden Zeitpunkt (z.B. in 1 Sekunde) in einem bestimmten Abstand zu der Rückfahr-Trajektorie befinden wird. Es kann dann auf Basis des Abstands detektiert oder bestimmt werden, dass das Fahrzeug auf der Rückwärtsfahrt die Rückfahr-Trajektorie verlässt (z.B. wenn der Abstand gleich wie oder größer als eine vordefinierter Abstands-Schwellenwert ist).

Die Steuereinheit ist ferner eingerichtet, in Reaktion darauf, dass detektiert oder bestimmt wurde, dass das Fahrzeug die Rückfahr-Trajektorie verlässt, zu veranlassen, dass das Fahrzeug in einer zweiten Vorwärtsfahrt an eine Rückfahrposition geführt wird, die es ermöglicht, das Fahrzeug wieder entlang zumindest eines Abschnitts (insbesondere entlang eines verbliebenden Abschnitts) der Rückfahr-Trajektorie zu der Anfangsposition zu führen. Dabei kann die Rückfahrposition auf der Rückfahr-Trajektorie liegen, so dass das Fahrzeug (assistiert durch das Rückfahrassistenzsystem) entlang der Rückfahr-Trajektorie von der Rückfahrposition bis zu der Anfangsposition geführt werden kann.

Somit kann der Fahrer eines Fahrzeugs auch bei einem Abkommen von der Rückfahr-Trajektorie weiterhin bei der Rückwärtsfahrt durch ein Rückfahrassistenzsystem unterstützt werden. So kann die Verfügbarkeit eines Rückfahrassistenzsystems erhöht werden.

Die Steuereinheit kann eingerichtet sein, eine Vorwärts-Trajektorie zu ermitteln, mit der das Fahrzeug in der zweiten Vorwärtsfahrt an die Rückfahrposition geführt werden kann. Dabei können die aktuelle Orientierung des Fahrzeugs und/oder die aktuelle Position des Fahrzeugs berücksichtigt werden. Die Rückfahrposition kann dabei bevorzugt auf der Rückfahr-Trajektorie liegen. Des Weiteren kann die Vorwärts-Trajektorie derart ermittelt werden, dass das Fahrzeug bei Erreichen der Rückfahrposition eine Orientierung aufweist, die es ermöglicht, das Fahrzeug direkt entlang der Rückfahr-Trajektorie von der Rückfahrposition an die Anfangsposition zu führen. Die Steuereinheit kann weiter eingerichtet sein, die Lenkvorrichtung des Fahrzeugs bei der zweiten Vorwärtsfahrt des Fahrzeugs in Abhängigkeit von der Vorwärts-Trajektorie zu steuern. So kann in komfortabler und zuverlässiger Weise ein Vorwärtszug ermöglicht werden, der das Fahrzeug zurück auf die Rückwärts-Trajektorie führt.

Die Steuereinheit kann eingerichtet sein, einen Hinweis an den Fahrer des Fahrzeugs auszugeben, wenn detektiert wurde, dass das Fahrzeug auf der Rückwärtsfahrt die Rückfahr-Trajektorie verlässt. Der Hinweis kann anzeigen, dass der Fahrer das Fahrzeug zum Stehen bringen soll (d.h. die Fahrgeschwindigkeit des Fahrzeugs auf null reduzieren soll) und dass der Fahrer einen Vorwärtsgang für die zweite Vorwärtsfahrt einlegen soll. So kann veranlasst werden, dass das Fahrzeug an die Rückfahrposition geführt wird.

Die Steuereinheit kann ferner eingerichtet sein, zu detektieren, dass das Fahrzeug die Rückfahrposition erreicht (z.B. erreicht hat oder erreichen wird). In Reaktion darauf kann der Fahrer des Fahrzeugs veranlasst werden, das Fahrzeug zum Stehen zu bringen und einen Rückwärtsgang einzulegen, um die Rückwärtsfahrt entlang des verbleibenden Abschnitts der Rückfahr-Trajektorie fortzuführen.

Gemäß einem weiteren Aspekt wird ein Verfahren zum Führen eines Fahrzeugs im Rahmen eines Rückfahrassistenzsystems mit automatisierter Querführung beschrieben. Das Verfahren umfasst das Ermitteln, auf Basis von Referenzdaten in Bezug auf eine erste Vorwärtsfahrt des Fahrzeugs, einer Rückfahr-Trajektorie für eine Rückwärtsfahrt von einer Endposition bis zu einer Anfangsposition. Es kann dann in Abhängigkeit von der Rückfahr-Trajektorie bei der Rückwärtsfahrt eine automatisierte Querführung des Fahrzeugs erfolgen. Außerdem umfasst das Verfahren das Detektieren, dass das Fahrzeug auf der Rückwärtsfahrt die Rückfahr-Trajektorie verlässt (z.B. verlassen hat oder verlassen wird). Das Verfahren umfasst weiter, in Reaktion darauf, das Veranlassen, dass das Fahrzeug in einer zweiten Vorwärtsfahrt an eine Rückfahrposition geführt wird, die es ermöglicht, das Fahrzeug wieder entlang zumindest eines (verbliebenen) Abschnitts der Rückfahr-Trajektorie zu der Anfangsposition zu führen.

Die oben beschriebenen Aspekte wurden in Zusammenhang mit einem Rückfahrassistenzsystem beschrieben. Es sei jedoch darauf hingewiesen, dass die beschriebenen Aspekte in entsprechender Weise auf Fahrerassistenzsysteme angewendet werden können, die eine automatisierte Quer- und/oder Längsführung eines Fahrzeugs umfassen. Insbesondere sind die beschriebenen Aspekte auf Fahrerassistenzsysteme zum Rangieren eines Fahrzeugs anwendbar. Dabei kann, insbesondere in den Ansprüchen, der Begriff "Rückfahrassistenzsystem" durch den Begriff "Fahrerassistenzsystem", der Begriff "erste Vorwärtsfahrt" durch den Begriff "Referenzfahrt", der Begriff "Rückwärtsfahrt" durch den Begriff "erneute Fahrt", der Begriff "zweite Vorwärtsfahrt" durch den Begriff "Korrekturfahrt", der Begriff "Vorwärts-Trajektorie" durch den Begriff "Korrektur-Trajektorie", der Begriff "Rückfahrposition" durch den Begriff "Korrekturposition" und/oder der Begriff "Rückfahr-Trajektorie" durch den Begriff "Fahr-Trajektorie" ersetzt werden.

Es wird somit eine Steuereinheit für ein Fahrerassistenzsystem eines Fahrzeugs mit automatisierter Querführung und/oder automatisierter Längsführung beschrieben. Die Steuereinheit ist eingerichtet, auf Basis von Referenzdaten in Bezug auf eine Referenzfahrt des Fahrzeugs eine Fahr-Trajektorie für eine erneute Fahrt zu ermitteln. Die Referenzfahrt kann z.B. einer Vorwärtsfahrt oder einer Rückwärtsfahrt entsprechen. Die erneute Fahrt kann dabei einer Fahrt in gleicher Richtung oder in entgegengesetzte Richtung zu der Referenzfahrt entsprechen. Bei der erneuten Fahrt erfolgt die Längsführung des Fahrzeugs zumindest teilweise manuell bzw. eigenständig durch den Fahrer des Fahrzeugs (z.B. durch Betätigung des Fahrpedals des Fahrzeugs).

Außerdem ist die Steuereinheit eingerichtet, zu detektieren, dass das Fahrzeug auf der erneuten Fahrt die Fahr-Trajektorie verlässt. Dies kann z.B. dadurch verursacht werden, dass der Fahrer das Fahrzeug mit einer zu hohen Fahrgeschwindigkeit fährt. Die Steuereinheit ist ferner eingerichtet, in Reaktion darauf, zu veranlassen, dass das Fahrzeug in einer Korrekturfahrt an eine Korrekturposition geführt wird, die es ermöglicht, das Fahrzeug wieder entlang zumindest eines Abschnitts der Fahr-Trajektorie zu führen. Die Korrekturfahrt kann dabei in einer Richtung erfolgen, die in entgegengesetzter Richtung zu der erneuten Fahrt erfolgt. Durch die Korrekturfahrt kann das Fahrzeug somit wieder auf die Fahr-Trajektorie zurückgeführt werden, um die erneute Fahrt entlang der Fahr-Trajektorie fortzuführen. Dabei kann die Korrekturposition auf der Fahr-Trajektorie liegen.

Somit kann der Fahrer eines Fahrzeugs auch beim Abkommen von der Fahr-Trajektorie weiterhin bei der erneuten Fahrt durch ein Fahrerassistenzsystem unterstützt werden. So kann die Verfügbarkeit eines Fahrerassistenzsystems erhöht werden. Insbesondere kann dabei eine Lenkvorrichtung des Fahrzeugs automatisch in Abhängigkeit von der Fahr-Trajektorie und/oder in Abhängigkeit von einer Korrektur-Trajektorie (für die Korrekturfahrt) gesteuert werden.

Die Steuereinheit kann eingerichtet sein, eine Korrektur-Trajektorie zu ermitteln, mit der das Fahrzeug in der Korrekturfahrt an die Korrekturposition geführt werden kann. Dabei können die aktuelle Orientierung des Fahrzeugs und/oder die aktuelle Position des Fahrzeugs berücksichtigt werden. Die Korrekturposition kann dabei bevorzugt auf der Fahr-Trajektorie liegen. Des Weiteren kann die Korrektur-Trajektorie derart ermittelt werden, dass das Fahrzeug bei Erreichen der Korrekturposition eine Orientierung aufweist, die es ermöglicht, das Fahrzeug direkt ausgehend von der Korrekturposition entlang der Fahr-Trajektorie zu führen. Die Steuereinheit kann weiter eingerichtet sein, die Lenkvorrichtung des Fahrzeugs bei der Korrekturfahrt des Fahrzeugs in Abhängigkeit von der Korrektur-Trajektorie zu steuern. So kann in komfortabler und zuverlässiger Weise ein Korrekturzug ermöglicht werden, der das Fahrzeug zurück auf die Korrektur-Trajektorie führt.

Die Steuereinheit kann eingerichtet sein, einen Hinweis an den Fahrer des Fahrzeugs auszugeben, wenn detektiert wurde, dass das Fahrzeug auf der erneuten Fahrt die Fahr-Trajektorie verlässt. Der Hinweis kann anzeigen, dass der Fahrer das Fahrzeug zum Stehen bringen soll (d.h. die Fahrgeschwindigkeit des Fahrzeugs auf null reduzieren soll) und dass der Fahrer einen Gangwechsel für die Korrekturfahrt einlegen soll (um die Fahrtrichtung des Fahrzeugs zu ändern). So kann veranlasst werden, dass das Fahrzeug an die Korrekturposition geführt wird.

Gemäß einem weiteren Aspekt wird ein Verfahren zum Führen eines Fahrzeugs im Rahmen eines Fahrerassistenzsystems mit automatisierter Querführung und/oder automatisierter Längsführung beschrieben. Das Verfahren umfasst das Ermitteln, auf Basis von Referenzdaten in Bezug auf eine Referenzfahrt des Fahrzeugs, einer Fahr-Trajektorie für eine erneute Fahrt. Außerdem umfasst das Verfahren das Detektieren, dass das Fahrzeug auf der erneuten Fahrt die Fahr-Trajektorie verlässt. Das Verfahren umfasst ferner, in Reaktion darauf, das Veranlassen, dass das Fahrzeug in einer Korrekturfahrt an eine Korrekturposition geführt wird, die es ermöglicht, das Fahrzeug wieder entlang zumindest eines Abschnitts der Fahr-Trajektorie zu führen.

Die Referenzfahrt kann bevorzugt eine Vorwärtsfahrt (in Vorwärtsrichtung des Fahrzeugs) sein. Alternativ kann die Referenzfahrt eine Rückwärtsfahrt (in Rückwärtsrichtung des Fahrzeugs) sein. Die erneute Fahrt kann eine Fahrt in Richtung zu der Endposition oder eine Fahrt in Richtung zu der Anfangsposition sein. Des Weiteren kann die erneute Fahrt eine Vorwärtsfahrt oder eine Rückwärtsfahrt sein. Bevorzugt ist die erneute Fahrt eine Rückwärtsfahrt in Richtung zu der Anfangsposition. Die Korrekturfahrt kann eine Fahrt in umgekehrter Richtung zu der erneuten Fahrt sein.

In einem weiteren bevorzugten Beispiel sind die Referenzfahrt und die erneute Fahrt jeweils eine Vorwärtsfahrt oder alternativ jeweils eine Rückwärtsfahrt. So kann einem Fahrzeug eine Referenz-Trajektorie für eine erneute Fahrt in der gleichen Fahrtrichtung bereitgestellt werden.

Die Steuereinheit kann eingerichtet sein, bei der erneuten Fahrt auf Basis der Fahr-Trajektorie eine automatisierte Querführung und eine automatisierte Längsführung durchzuführen. Ggf. kann die Steuereinheit ein Steuersignal von einer Fernbedienung des Fahrzeugs empfangen und daraufhin die Längsführung des Fahrzeugs veranlassen. So kann ein Nutzer des Fahrzeugs die Längsführung des Fahrzeugs mittels einer Fernbedienung steuern.

Gemäß einem weiteren Aspekt wird ein mehrspuriges Fahrzeug (insbesondere ein Straßenkraftfahrzeug z.B. ein Personenkraftwagen oder ein Lastkraftwagen oder ein Bus) beschrieben, das eine in diesem Dokument beschriebene Steuereinheit umfasst.

Gemäß einem weiteren Aspekt wird ein Software (SW) Programm beschrieben. Das SW Programm kann eingerichtet werden, um auf einem Prozessor (z.B. auf einem Steuergerät eines Fahrzeugs) ausgeführt zu werden, und um dadurch eines der in diesem Dokument beschriebenen Verfahren auszuführen.

Gemäß einem weiteren Aspekt wird ein Speichermedium beschrieben. Das Speichermedium kann ein SW Programm umfassen, welches eingerichtet ist, um auf einem Prozessor ausgeführt zu werden, und um dadurch eines der in diesem Dokument beschriebenen Verfahren auszuführen.

Es ist zu beachten, dass die in diesem Dokument beschriebenen Verfahren, Vorrichtungen und Systeme sowohl alleine, als auch in Kombination mit anderen in diesem Dokument beschriebenen Verfahren, Vorrichtungen und Systemen verwendet werden können. Des Weiteren können jegliche Aspekte der in diesem Dokument beschriebenen Verfahren, Vorrichtungen und Systemen in vielfältiger Weise miteinander kombiniert werden. Insbesondere können die Merkmale der Ansprüche in vielfältiger Weise miteinander kombiniert werden.

Im Weiteren wird die Erfindung anhand von Ausführungsbeispielen näher beschrieben. Dabei zeigen
Figur 1 ein beispielhaftes zweispuriges Fahrzeug;
Figur 2 ein beispielhaftes Fahrmanöver;
Figur 3 einen beispielhaften Vorwärtszug im Rahmen eines assistierten Rückfahrmanövers; und
Figur 4 ein Ablaufdiagramm eines beispielhaften Verfahrens zur Bereitstellung eines Korrekturzugs für ein Rückfahrmanöver.

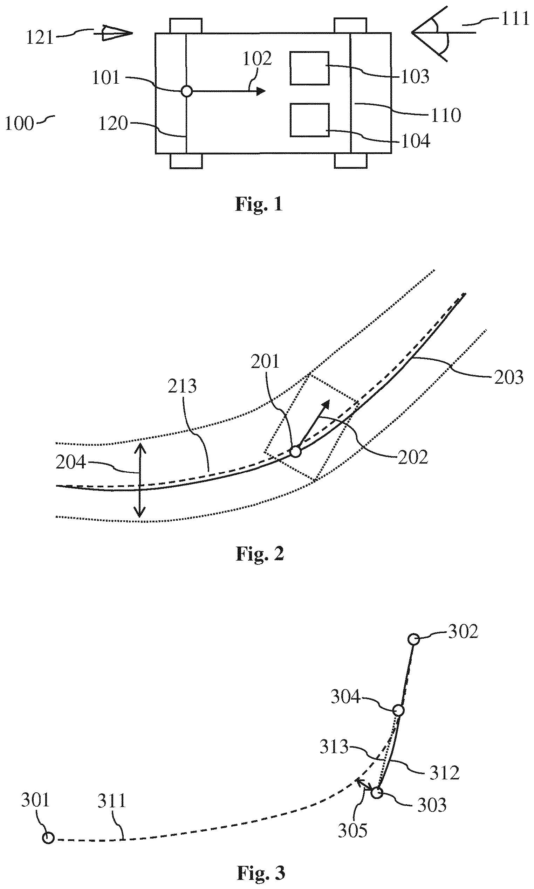

Wie eingangs dargelegt, befasst sich das vorliegende Dokument mit der Unterstützung eines Fahrers eines Fahrzeugs bei einem Rückfahrmanöver. In diesem Zusammenhang zeigt Fig. 1 ein Blockdiagramm eines beispielhaften mehrspurigen, insbesondere zweispurigen, Fahrzeugs 100. Das Fahrzeug 100 umfasst eine Vorderachse 110 und eine Hinterachse 120. Dabei kann über eine Lenkvorrichtung der Vorderachse 110 ein bestimmter vorderer Lenkwinkelbereich 111 umgesetzt werden. Ggf. kann das Fahrzeug 100 eine Hinterradlenkvorrichtung aufweisen, mit der ein bestimmter hinterer Lenkwinkelbereich 121 umgesetzt werden kann. Typischerweise ist der vordere Lenkwinkelbereich 111 substantiell größer als der hintere Lenkwinkelbereich 121.

Im Folgenden werden die in diesem Dokument beschriebenen Maßnahmen auf Basis eines Rückfahrassistenzsystems beschrieben, bei dem eine Referenzfahrt zur Aufzeichnung einer Referenz-Trajektorie in Vorwärtsrichtung erfolgt und bei dem eine erneute Fahrt entlang einer Fahr-Trajektorie in Rückwärtsrichtung entlang einer Rückfahr-Trajektorie erfolgt. Die beschriebene erste Vorwärtsfahrt ist somit ein Beispiel für eine allgemeine Referenzfahrt und die beschriebene Rückfahr-Trajektorie ist ein Beispiel für eine allgemeine Fahr-Trajektorie. Des Weiteren ist die zweite Vorwärtsfahrt an die Rückfahrposition ein Beispiel für einen Korrekturfahrt an eine Korrekturposition. Insbesondere gelten die in diesem Dokument beschriebenen Aspekte
- in Bezug auf eine erste Vorwärtsfahrt allgemein für eine Referenzfahrt (die ggf. jeweils in Rückwärtsrichtung mit einem Fahrzeug 100 gefahren werden kann);
- in Bezug auf eine Rückwärtsfahrt allgemein für eine erneute Fahrt (die ggf. auch in Vorwärtsrichtung mit einem Fahrzeug 100 gefahren werden kann);
- in Bezug auf eine Rückfahr-Trajektorie allgemein für eine Fahr-Trajektorie (die ggf. auch in der gleichen Richtung gefahren werden kann, wie die Referenz-Trajektorie bei der Referenzfahrt);
- in Bezug auf eine zweite Vorwärtsfahrt allgemein für eine Korrekturfahrt, die typischerweise eine zu der erneuten Fahrt entgegengesetzte Fahrtrichtung aufweist;
- in Bezug auf eine Vorwärts-Trajektorie allgemein für eine Korrektur-Trajektorie für die Korrekturfahrt;
- in Bezug auf einen Vorwärtsgang bzw. auf einen Rückwärtsgang allgemein für einen Gang, der für die jeweilige Fahrtrichtung erforderlich ist; und/oder
- in Bezug auf eine Rückfahrposition allgemein für ein Korrekturposition (auf der Fahr-Trajektorie), die durch eine Korrekturfahrt angefahren werden kann.

Ein Nutzer des Fahrzeugs 100 kann z.B. bei Einfahrt in ein Parkhaus ein Rückfahrassistenzsystem aktivieren. In Reaktion darauf wird von einer Steuereinheit 103 des Fahrzeugs 100 bei einer Vorwärtsfahrt eine Referenz-Trajektorie 203 (siehe Fig. 2) erfasst und in einer Speichereinheit 104 gespeichert. Die Speichereinheit 104 kann z.B. als Ringspeicher realisiert sein, auf dem Referenzdaten in Bezug auf eine Referenz-Trajektorie 203 der letzten x Meter einer Vorwärtsfahrt gespeichert werden können (wobei x= 30, 40, 50 oder mehr). Wenn die Vorwärtsfahrt länger als die Nenndistanz von x Metern ist, so können die Referenzdaten in Bezug auf den jeweils am weitesten zurückliegenden Abschnitt der Referenz-Trajektorie 203 mit Referenzdaten in Bezug auf den aktuellen Abschnitt der Referenz-Trajektorie 203 überschrieben werden.

Die Referenzdaten bezüglich einer Referenz-Trajektorie 203 kann Positionsinformation 201 in Bezug auf einen Referenzpunkt 101 des Fahrzeugs 100 umfassen, wobei der Referenzpunkt 101 z.B. dem Mittelpunkt der Hinterachse 120 entsprechen kann. Die Referenzdaten in Bezug auf die Position des Referenzpunkts 101 können mit einer bestimmten Abtastrate (z.B. alle 10cm, 5cm, oder weniger) ermittelt werden, so dass anhand der Positionsinformation 201 bzgl. der Position des Referenzpunktes 101 der Verlauf der Referenz-Trajektorie 203 bei der Vorwärtsfahrt des Fahrzeugs 100 in präziser Weise beschrieben werden kann.

Ein Fahrzeug 100 weist an einer bestimmten Position auf einer Vorwärtsfahrt eine bestimmte Orientierung 102 auf. An einer Position kann daher Orientierungsinformation 202 in Bezug auf eine Verdrehung bzw. Ausrichtung bzw. Orientierung 102 des Fahrzeugs 100 relativ zu dem Referenzpunkt 101 ermittelt werden. Anhand der Orientierungsinformation 202 an der Vielzahl von Positionen der Referenz-Trajektorie 203 kann ein Abdeckungsbereich 204, insbesondere ein Schlauch, um die Referenz-Trajektorie 203 ermittelt werden (siehe Fig. 2), der den Bereich anzeigt, an dem sich während der Vorwärtsfahrt eine Komponente (z.B. ein Teil der Karosserie) des Fahrzeugs 100 befunden hat. Der Abdeckungsbereich 204 zeigt somit, bei Annahme von statischen Hindernissen auf der Referenz-Trajektorie 203, den Bereich an, in dem das Fahrzeug 100 kollisionsfrei entlang einer Rückfahr-Trajektorie 213 geführt werden kann. Mit anderen Worten, die Rückfahr-Trajektorie 213 kann derart auf Basis der Referenz-Trajektorie 203 ermittelt werden, dass das Fahrzeug 100 bei der Rückwärtsfahrt entlang der Rückfahr-Trajektorie 213 innerhalb des Abdeckungsbereichs 204 bleibt. So kann, bei Annahme von statischen Hindernissen, eine kollisionsfreie Rückfahrt ermöglicht werden.

Die Referenzdaten bezüglich der bei der Vorwärtsfahrt ermittelten Referenz-Trajektorie 203 können somit für eine Vielzahl von Positionen auf der Referenz-Trajektorie 203 jeweils Positionsinformation 201 umfassen, die die Position des Referenzpunktes 101 des Fahrzeugs 100 anzeigt (z.B. in einem kartesischen Koordinatensystem relativ zu der Anfangsposition der Referenz-Trajektorie 203). Des Weiteren können die Referenzdaten für die Vielzahl von Positionen jeweils Orientierungsinformation 201 in Bezug auf eine Orientierung 102 des Fahrzeugs 100 an der jeweiligen Position anzeigen. So können die Referenz-Trajektorie 203 und der Abdeckungsbereich 204 des Fahrzeugs 100 auf einer Vorwärtsfahrt in präziser Weise beschrieben werden.

Alternativ oder ergänzend können die Referenzdaten für Trajektorien-Segmente zwischen einer Vielzahl von Positionen Krümmungsinformation in Bezug auf eine Krümmung des jeweiligen Trajektorien-Segments umfassen. Die Referenz-Trajektorie 203 kann dann durch eine Sequenz von Krümmungswerten beschrieben werden. Des Weiteren kann durch Interpolation der Sequenz von Krümmungswerten ein Verlauf der Referenz-Trajektorie 203 ermittelt werden (z.B. durch die Verwendung von Klothoiden). Aus den Krümmungswerten kann auch der Abdeckungsbereich 204 des Fahrzeugs bei der Vorwärtsfahrt auf der Referenz-Trajektorie 203 ermittelt werden.

Die Referenzdaten können somit auf unterschiedliche Weise eine Referenz-Trajektorie 203 und einen Abdeckungsbereich 204 eines Fahrzeugs 100 bei einer Vorwärtsfahrt beschreiben. Bei Erreichen einer Endposition der Referenz-Trajektorie 203 (z.B. wenn detektiert wird, dass der Fahrer des Fahrzeugs 100 einen Rückwärtsgang einlegt), kann auf Basis der Referenzdaten eine Rückfahr-Trajektorie 213 für eine unterstützte Rückfahrt des Fahrzeugs 100 zu der Anfangsposition der Referenz-Trajektorie 203 ermittelt werden. Dabei kann die Referenz-Trajektorie 203 derart ermittelt werden, dass das Fahrzeug 100
- die Anfangsposition der Referenz-Trajektorie 203 erreicht; und/oder
- möglichst weitgehend innerhalb des Abdeckungsbereichs 204 bleibt.

Die ermittelte Rückfahr-Trajektorie 213 kann insbesondere einen Lenkwinkel der Lenkvorrichtung der Vorderachse 110 des Fahrzeugs 100 als Funktion der Position auf der Rückfahr-Trajektorie 213 anzeigen. Der Fahrer des Fahrzeugs 100 kann dann auf Basis der ermittelten Rückfahr-Trajektorie 213 bei der Rückwärtsfahrt unterstützt werden. Insbesondere kann die Lenkvorrichtung des Fahrzeugs 100 automatisch in Abhängigkeit von der Rückfahr-Trajektorie 213 angesteuert werden, um die Querführung des Fahrzeugs 100 zu übernehmen. Andererseits kann die Längsführung des Fahrzeugs 100, insbesondere die Festlegung der Längsgeschwindigkeit und der Fahrrichtung (Vorwärtsgang bzw. Rückwärtsgang) des Fahrzeugs 100, weiter durch den Fahrer durchgeführt werden. Die Bereitstellung eines derartigen Rückfahrassistenten ermöglicht es einem Fahrer eines Fahrzeugs 100, in komfortabler Weise rückwärts aus einer beengten Verkehrssituation (z.B. aus einem engen Parkhaus) herauszufahren.

Eine automatische Lenkvorrichtung eines Fahrzeugs 100 weist typischerweise eine maximal mögliche Lenkgeschwindigkeit auf. Als Folge daraus ist typischerweise die Fahrgeschwindigkeit, mit der ein Fahrzeug 100 entlang der Rückwärts-Trajektorie 213 geführt werden kann, je nach aktueller Krümmung der Rückwärts-Trajektorie 213, auf eine bestimmte maximale Fahrgeschwindigkeit beschränkt. Wird die maximale Fahrgeschwindigkeit überschritten, so kommt das Fahrzeug 100 von der Rückwärts-Trajektorie 213 ab. Als Folge daraus kann es erforderlich sein, dass das Rückfahrassistenzsystem abgeschaltet wird. Dadurch sinkt die Verfügbarkeit des Rückfahrassistenzsystems.

Fig. 3 veranschaulicht ein Fahrscenario, bei dem ein Fahrzeug 100 entlang der Rückfahr-Trajektorie 311 von einer Endposition 302 zu einer Anfangsposition 301 geführt werden soll (wobei sich die jeweiligen Positionen 301, 302 in diesem Dokument auf den Referenzpunkt 101 des Fahrzeugs 100 beziehen). Aufgrund einer überhöhten Fahrgeschwindigkeit kann das Fahrzeug 100 jedoch von der Rückfahr-Trajektorie 311 abkommen und entlang der Trajektorie 312 geführt werden. Für die Zwischenposition 303 kann detektiert werden, dass der Abstand 305 der Zwischenposition 303 zu der ursprünglich vorgesehenen Rückfahr-Trajektorie 311 einen bestimmten Abstands-Schwellenwert erreicht oder überschritten hat. Als Reaktion darauf, kann über eine Benutzerschnittstelle des Fahrzeugs 100 ein (optischer und/oder akustischer) Hinweis an den Fahrer des Fahrzeugs 100 ausgegeben werden. Insbesondere kann ein Hinweis darüber ausgegeben werden, dass das Fahrzeug 100 von der geplanten Rückfahr-Trajektorie 311 abkommt oder bereits abgekommen ist. Des Weiteren kann der Fahrer des Fahrzeugs 100 aufgefordert werden, das Fahrzeuzg 100 zu stoppen, einen Vorwärtsgang einzulegen und ggf. entlang einer Vorwärts-Trajektorie 313 zu einer Rückfahrposition 304 zu fahren, um das Fahrzeug 100 wieder auf die geplante Rückfahr-Trajektorie 311 zu überführen. Es kann somit die Durchführung eines Korrekturzugs in Vorwärtsrichtung vorgeschlagen werden, um das Fahrzeug 100 in Vorwärtsrichtung zurück auf die Rückfahr-Trajektorie 311 zu bringen.

Die Vorwärts-Trajektorie 313 kann von der Steuereinheit 103 des Fahrzeugs 100 auf Basis der Positionsinformation in Bezug auf die Zwischenposition 303 und auf Basis der gespeicherten Daten in Bezug auf die Rückfahr-Trajektorie 311 ermittelt werden. Des Weiteren kann die Steuereinheit 103 eingerichtet sein, die Lenkvorrichtung des Fahrzeugs 100 auf Basis der ermittelten Vorwärts-Trajektorie 313 anzusteuern, um den Fahrer des Fahrzeugs 100 bei dem Korrekturzug zu unterstützen.

Bei Ankunft an der Rückfahrposition 304 kann der Fahrer des Fahrzeugs 100 aufgefordert werden, einen Rückwärtsgang einzulegen, um die unterstützte Rückwärtsfahrt entlang der Rückfahr-Trajektorie 311 ausgehend von der Rückfahrposition 304 wieder aufzunehmen.

Die Steuereinheit 103 kann somit detektieren, dass das Fahrzeug 100 die Soll-Trajektorie 311 verlassen wird oder bereits verlassen hat. In Reaktion darauf kann ein Vorwärtszug (insbesondere eine Vorwärts-Trajektorie 313) geplant werden, um anschließend an den Vorwärtszug wieder auf die Soll-Trajektorie 311 fahren zu können. Der Fahrer kann über eine Benutzerschnittstelle des Fahrzeugs 100 (z.B. über eine Head Unit) aufgefordert werden, das Fahrzeug 100 anzuhalten und einen Gangwechsel vorzunehmen. Im Anschluss an den Gangwechsel kann ggf. ein automatisierter Vorwärtszug erfolgen. Anschließend kann das Fahrzeug 100 wieder angehalten werden und es kann eine automatisierte Rückwärtsfahrt auf der ursprünglichen Trajektorie 311 erfolgen.

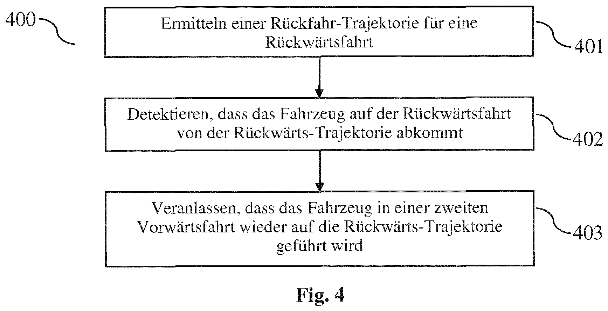

Fig. 4 zeigt ein Ablaufdiagramm eines beispielhaften Verfahrens 400 zum Führen eines Fahrzeugs 100 im Rahmen eines Rückfahrassistenzsystems. Das Verfahren 400 umfasst das Ermitteln 401, auf Basis von Referenzdaten in Bezug auf eine erste Vorwärtsfahrt des Fahrzeugs 100, einer Rückfahr-Trajektorie 311 für eine Rückwärtsfahrt von einer Endposition 302 bis zu einer Anfangsposition 301. Die Referenzdaten können im Rahmen der ersten Vorwärtsfahrt erfasst und gespeichert worden sein. Dabei können die Referenzdaten insbesondere den Verlauf der Referenz-Trajektorie 203 anzeigen, entlang der das Fahrzeug 100 bei der ersten Vorwärtsfahrt geführt wurde. Typischerweise wurde das Fahrzeug 100 im Rahmen der ersten Vorwärtsfahrt durch einen Fahrer des Fahrzeugs 100 längs- und quergeführt. Insbesondere kann während der ersten Vorwärtsfahrt die Lenkvorrichtung des Fahrzeugs 100 manuell durch den Fahrer des Fahrzeugs 100 betätigt worden sein. Die Rückfahr-Trajektorie 311 kann (substantiell) der Referenz-Trajektorie 203 entsprechen, so dass das Fahrzeug 100 auf dem gleichen Weg wieder zu der Anfangsposition 301 zurückgeführt werden kann.

Das Verfahren 400 umfasst weiter das Detektieren oder Bestimmen 402, dass das Fahrzeug 100 auf der Rückwärtsfahrt die Rückfahr-Trajektorie 311 verlässt. Während der Rückwärtsfahrt kann die Lenkvorrichtung des Fahrzeugs 100 automatisch auf Basis der Rückfahr-Trajektorie 311 durch eine Steuereinheit 103 des Fahrzeugs 100 gesteuert werden. Andererseits kann die Fahrgeschwindigkeit durch den Fahrer des Fahrzeugs 100 eingestellt werden. Aufgrund einer zu hohen Fahrgeschwindigkeit kann es dazu kommen, dass das Fahrzeug 100 nicht mehr der Rückfahr-Trajektorie 311 folgen kann (insbesondere bei einer engen Kurve). Als Folge daraus könnte ein Beenden des Rückfahrassistenzsystem erforderlich sein.

Das Verfahren 400 umfasst jedoch, in Reaktion auf das Detektieren 402, das Veranlassen 403, dass das Fahrzeug 100 in einer zweiten Vorwärtsfahrt an eine Rückfahrposition 304 geführt wird, die es ermöglicht, das Fahrzeug 100 wieder entlang zumindest eines (verbliebenden) Abschnitts der Rückfahr-Trajektorie 311 zu der Anfangsposition 301 zu führen. Die Rückfahrposition 304 kann dabei auf der Rückfahr-Trajektorie 311 liegen, so dass das Fahrzeug 100 wieder durch das Rückfahrassistenzsystem entlang der Rückfahr-Trajektorie 311 von der Rückfahrposition 304 bis zu der Anfangsposition 301 (quer-)geführt werden kann.

Durch die in diesem Dokument beschriebenen Maßnahmen können unnötige Deaktivierungen eines Rückfahrassistenzsystem vermieden werden. So kann die Verfügbarkeit eines Rückfahrassistenzsystem erhöht werden.

Die vorliegende Erfindung ist nicht auf die gezeigten Ausführungsbeispiele beschränkt. Insbesondere ist zu beachten, dass die Beschreibung und die Figuren nur das Prinzip der vorgeschlagenen Verfahren, Vorrichtungen und Systeme veranschaulichen sollen.

## Patentansprüche

1. Steuereinheit (103) für ein Rückfahrassistenzsystem eines Fahrzeugs (100); wobei die Steuereinheit (103) eingerichtet ist,
- auf Basis von Referenzdaten in Bezug auf eine erste Vorwärtsfahrt des Fahrzeugs (100) eine Rückfahr-Trajektorie (311) für eine Rückwärtsfahrt von einer Endposition (302) bis zu einer Anfangsposition (301) zu ermitteln;
- eine Lenkvorrichtung des Fahrzeugs (100) bei der Rückwärtsfahrt des Fahrzeugs (100) in Abhängigkeit von der Rückfahr-Trajektorie (311) zu steuern; wobei die Längsführung des Fahrzeugs (100) bei der Rückwärtsfahrt zumindest teilweise durch einen Fahrer des Fahrzeugs (100) erfolgt;
- zu detektieren, dass das Fahrzeug (100) auf der Rückwärtsfahrt die Rückfahr-Trajektorie (311) verlässt; und
- in Reaktion darauf, zu veranlassen, dass das Fahrzeug (100) in einer zweiten Vorwärtsfahrt an eine Rückfahrposition (304) geführt wird, die es ermöglicht, das Fahrzeug (100) wieder entlang zumindest eines Abschnitts der Rückfahr-Trajektorie (311) zu der Anfangsposition (301) zu führen.

2. Steuereinheit (103) gemäß Anspruch 1, wobei die Steuereinheit (103) eingerichtet ist,
- einen Abstand (305) einer aktuellen oder einer prädizierten Position (303) des Fahrzeugs (100) von der Rückfahr-Trajektorie (311) zu ermitteln; und
- auf Basis des Abstands (305) zu detektieren, dass das Fahrzeug (100) auf der Rückwärtsfahrt die Rückfahr-Trajektorie (311) verlässt.

3. Steuereinheit (103) gemäß einem der vorhergehenden Ansprüche, wobei die Steuereinheit (103) eingerichtet ist, eine Vorwärts-Trajektorie (313) zu ermitteln, mit der das Fahrzeug (100) in der zweiten Vorwärtsfahrt an die Rückfahrposition (304) geführt werden kann.

4. Steuereinheit (103) gemäß Anspruch 3, wobei die Steuereinheit (103) eingerichtet ist, eine Lenkvorrichtung des Fahrzeugs (100) bei der zweiten Vorwärtsfahrt des Fahrzeugs (100) in Abhängigkeit von der Vorwärts-Trajektorie (313) zu steuern.

5. Steuereinheit (103) gemäß einem der vorhergehenden Ansprüche, wobei
- die Steuereinheit (103) eingerichtet ist, einen Hinweis an einen Fahrer des Fahrzeugs (100) auszugeben, wenn detektiert wurde, dass das Fahrzeug (100) auf der Rückwärtsfahrt die Rückfahr-Traj ektorie (311) verlässt; und
- der Hinweis anzeigt, dass der Fahrer das Fahrzeug (100) zum Stehen bringen soll und dass der Fahrer einen Vorwärtsgang für die zweite Vorwärtsfahrt einlegen soll.

6. Steuereinheit (103) gemäß einem der vorhergehenden Ansprüche, wobei die Steuereinheit (103) eingerichtet ist,
- zu detektieren, dass das Fahrzeug (100) die Rückfahrposition (304) erreicht; und
- in Reaktion darauf, einen Fahrer des Fahrzeugs (100) zu veranlassen, das Fahrzeug (100) zum Stehen zu bringen und einen Rückwärtsgang einzulegen, um die Rückwärtsfahrt fortzuführen.

7. Steuereinheit (103) gemäß einem der vorhergehenden Ansprüche, wobei die Referenzdaten eine Referenz-Trajektorie (203) des Fahrzeugs (100) für die erste Vorwärtsfahrt von der Anfangsposition (301) bis zu der Endposition (302) anzeigen.

8. Steuereinheit (103) gemäß einem der vorhergehenden Ansprüche, wobei die Referenzdaten,
- Positionsinformation (201) in Bezug auf eine Vielzahl von Positionen auf einer Referenz-Trajektorie (203) der ersten Vorwärtsfahrt umfassen; und
- Orientierungsinformation (202) in Bezug auf eine Orientierung (102) des Fahrzeugs (100) an der Vielzahl von Positionen umfassen.

9. Verfahren (400) zum Führen eines Fahrzeugs (100) im Rahmen eines Rückfahrassistenzsystems mit automatisierter Querführung; wobei das Verfahren (400) umfasst,
- Ermitteln (401), auf Basis von Referenzdaten in Bezug auf eine erste Vorwärtsfahrt des Fahrzeugs (100), einer Rückfahr-Trajektorie (311) für eine Rückwärtsfahrt von einer Endposition (302) bis zu einer Anfangsposition (301);
- Detektieren (402), dass das Fahrzeug (100) auf der Rückwärtsfahrt die Rückfahr-Trajektorie (311) verlässt; wobei die Längsführung des Fahrzeugs (100) bei der Rückwärtsfahrt zumindest teilweise durch einen Fahrer des Fahrzeugs (100) erfolgt; und
- in Reaktion darauf, Veranlassen (403), dass das Fahrzeug (100) in einer zweiten Vorwärtsfahrt an eine Rückfahrposition (304) geführt wird, die es ermöglicht, das Fahrzeug (100) wieder entlang zumindest eines Abschnitts der Rückfahr-Trajektorie (311) zu der Anfangsposition (301) zu führen.

10. Steuereinheit (103) für ein Fahrerassistenzsystem eines Fahrzeugs (100) mit automatisierter Querführung und/oder automatisierter Längsführung; wobei die Steuereinheit (103) eingerichtet ist,
- auf Basis von Referenzdaten in Bezug auf eine erste Referenzfahrt des Fahrzeugs (100) eine Fahr-Trajektorie (311) für eine erneute Fahrt zu ermitteln;
- zu detektieren, dass das Fahrzeug (100) auf der erneuten Fahrt die Fahr-Trajektorie (311) verlässt; wobei die Längsführung des Fahrzeugs (100) bei der erneuten Fahrt zumindest teilweise durch einen Fahrer des Fahrzeugs (100) erfolgt; und
- in Reaktion darauf, zu veranlassen, dass das Fahrzeug (100) in einer Korrekturfahrt an eine Korrekturposition (304) geführt wird, die es ermöglicht, das Fahrzeug (100) wieder entlang zumindest eines Abschnitts der Fahr-Trajektorie (311) zu führen.

11. Verfahren zum Führen eines Fahrzeugs im Rahmen eines Fahrerassistenzsystems mit automatisierter Querführung und/oder automatisierter Längsführung; wobei das Verfahren umfasst,
- Ermitteln, auf Basis von Referenzdaten in Bezug auf eine Referenzfahrt des Fahrzeugs (100), einer Fahr-Trajektorie (311) für eine erneute Fahrt;
- Detektieren, dass das Fahrzeug (100) auf der erneuten Fahrt die Fahr-Trajektorie (311) verlässt; wobei die Längsführung des Fahrzeugs (100) bei der erneuten Fahrt zumindest teilweise durch einen Fahrer des Fahrzeugs (100) erfolgt; und
- in Reaktion darauf, Veranlassen, dass das Fahrzeug (100) in einer Korrekturfahrt an eine Korrekturposition (304) geführt wird, die es ermöglicht, das Fahrzeug (100) wieder entlang zumindest eines Abschnitts der Fahr-Trajektorie (311) zu führen.

## Claims

1. Control unit (103) for a reversing assistance system of a vehicle (100); wherein the control unit (103) is configured
- to take reference data in regard to a first forward travel of the vehicle (100) as a basis for ascertaining a reversing trajectory (311) for a reverse travel from an end position (302) to an initial position (301);
- to control a steering apparatus of the vehicle (100) during the reverse travel of the vehicle (100) on the basis of the reversing trajectory (311); wherein during the reverse travel, the longitudinal guidance of the vehicle (100) is effected at least at times by a driver of the vehicle (100);
- to detect that the vehicle (100) leaves the reversing trajectory (311) on the reverse travel; and
- to react thereto by prompting the vehicle (100) to be driven, in a second forward travel, to a reversing position (304) that allows the vehicle (100) to be driven along at least one section of the reversing trajectory (311) again to the initial position (301).

2. Control unit (103) according to Claim 1, wherein the control unit (103) is configured
- to ascertain a distance (305) of a present or predicted position (303) of the vehicle (100) from the reversing trajectory (311); and
- to take the distance (305) as a basis for detecting that the vehicle (100) leaves the reversing trajectory (311) on the reverse travel.

3. Control unit (103) according to either of the preceding claims, wherein the control unit (103) is configured to ascertain a forward trajectory (313) that can be used to drive the vehicle (100) to the reversing position (304) in the second forward travel.

4. Control unit (103) according to Claim 3, wherein the control unit (103) is configured to control a steering apparatus of the vehicle (100) during the second forward travel of the vehicle (100) on the basis of the forward trajectory (313).

5. Control unit (103) according to one of the preceding claims, wherein
- the control unit (103) is configured to output advice to a driver of the vehicle (100) if it has been detected that the vehicle (100) leaves the reversing trajectory (311) on the reverse travel; and
- the advice indicates that the driver needs to bring the vehicle (100) to a standstill and that the driver needs to select a forward gear for the second forward travel.

6. Control unit (103) according to one of the preceding claims, wherein the control unit (103) is configured
- to detect that the vehicle (100) reaches the reversing position (304); and
- to react thereto by prompting a driver of the vehicle (100) to bring the vehicle (100) to a standstill and to select a reverse gear in order to continue the reverse travel.

7. Control unit (103) according to one of the preceding claims, wherein the reference data indicate a reference trajectory (203) of the vehicle (100) for the first forward travel from the initial position (301) to the end position (302).

8. Control unit (103) according to one of the preceding claims, wherein the reference data
- comprise position information (201) in regard to a multiplicity of positions on a reference trajectory (203) of the first forward travel; and
- comprise orientation information (202) in regard to an orientation (102) of the vehicle (100) at the multiplicity of positions.

9. Method (400) for driving a vehicle (100) within the scope of a reversing assistance system having automated transverse guidance; wherein the method (400) comprises
- ascertaining (401), on the basis of reference data in regard to a first forward travel of the vehicle (100), a reversing trajectory (311) for a reverse travel from an end position (302) to an initial position (301);
- detecting (402) that the vehicle (100) leaves the reversing trajectory (311) on the reverse travel; wherein during the reverse travel, the longitudinal guidance of the vehicle (100) is effected at least at times by a driver of the vehicle (100); and
- reacting thereto by prompting (403) the vehicle (100) to be driven, in a second forward travel, to a reversing position (304) that allows the vehicle (100) to be driven along at least one section of the reversing trajectory (311) again to the initial position (301).

10. Control unit (103) for a driver assistance system of a vehicle (100) having automated transverse guidance and/or automated longitudinal guidance; wherein the control unit (103) is configured
- to take reference data in regard to a first reference travel of the vehicle (100) as a basis for ascertaining a travel trajectory (311) for a renewed travel;
- to detect that the vehicle (100) leaves the travel trajectory (311) on the renewed travel; wherein during the renewed travel, longitudinal guidance of the vehicle (100) is effected at least at times by a driver of the vehicle (100); and
- to react thereto by prompting the vehicle (100) to be driven, in a correction travel, to a correction position (304) that allows the vehicle (100) to be driven along at least one section of the travel trajectory (311) again.

11. Method for driving a vehicle within the scope of a driver assistance system having automated transverse guidance and/or automated longitudinal guidance; wherein the method comprises
- ascertaining, on the basis of reference data in regard to a reference travel of the vehicle (100), a travel trajectory (311) for a renewed travel;
- detecting that the vehicle (100) leaves the travel trajectory (311) on the renewed travel; wherein during the renewed travel, the longitudinal guidance of the vehicle (100) is effected at least at times by a driver of the vehicle (100); and
- reacting thereto by prompting the vehicle (100) to be driven, in a correction travel, to a correction position (304) that allows the vehicle (100) to be driven along at least one section of the travel trajectory (311) again.

## Revendications

1. Unité de commande (103) pour un système d'aide à la marche arrière d'un véhicule (100) ; l'unité de commande (103) étant conçue
- pour déterminer, sur la base de données de référence relatives à une première marche avant du véhicule (100), une trajectoire de recul (311) pour une marche arrière d'une position finale (302) à une position initiale (301) ;
- pour commander un dispositif de direction du véhicule (100) lors de la marche arrière du véhicule (100) en fonction de la trajectoire de recul (311) ; le guidage longitudinal du véhicule (100) lors de la marche arrière étant effectué au moins partiellement par un conducteur du véhicule (100) ;
- pour détecter que le véhicule (100) en marche arrière quitte la trajectoire de recul (311) ; et
- pour faire en sorte, en réaction à cette situation, que le véhicule (100) soit guidé, dans une deuxième marche avant, à une position de recul (304) qui permet de guider de nouveau le véhicule (100) à la position initiale (301) le long d'au moins une section de la trajectoire de recul (311).

2. Unité de commande (103) selon la revendication 1, l'unité de commande (103) étant conçue
- pour déterminer une distance (305) d'une position actuelle ou prédite (303) du véhicule (100) à la trajectoire de recul (311) ; et
- pour détecter, sur la base de la distance (305), que le véhicule (100) en marche arrière quitte la trajectoire de recul (311).

3. Unité de commande (103) selon l'une quelconque des revendications précédentes, l'unité de commande (103) étant conçue pour déterminer une trajectoire d'avancée (313), avec laquelle le véhicule (100) peut être guidé, dans la deuxième marche avant, à la position de recul (304) .

4. Unité de commande (103) selon la revendication 3, l'unité de commande (103) étant conçue pour commander un dispositif de direction du véhicule (100) lors de la deuxième marche avant du véhicule (100) en fonction de la trajectoire d'avancée (313).

5. Unité de commande (103) selon l'une quelconque des revendications précédentes,
- l'unité de commande (103) étant conçue pour émettre une notification à un conducteur du véhicule (100) lorsqu'il a été détecté que le véhicule (100) en marche arrière quitte la trajectoire de recul (311) ; et
- la notification indiquant que le conducteur doit immobiliser le véhicule (100) et que le conducteur doit engager un rapport avant pour la deuxième marche avant.

6. Unité de commande (103) selon l'une quelconque des revendications précédentes, l'unité de commande (103) étant conçue
- pour détecter que le véhicule (100) atteint la position de recul (304) ; et
- pour faire en sorte, en réaction à cette situation, qu'un conducteur du véhicule (100) immobilise le véhicule (100) et engage un rapport arrière, afin de poursuivre la marche arrière.

7. Unité de commande (103) selon l'une quelconque des revendications précédentes, dans laquelle les données de référence indiquent une trajectoire de référence (203) du véhicule (100) pour la première marche avant de la position initiale (301) à la position finale (302) .

8. Unité de commande (103) selon l'une quelconque des revendications précédentes, dans laquelle les données de référence
- comprennent des informations de position (201) relatives à une pluralité de positions sur une trajectoire de référence (203) de la première marche avant ; et
- comprennent des informations d'orientation (202) relatives à une orientation (102) du véhicule (100) à la pluralité de positions.

9. Procédé (400) pour guider un véhicule (100) dans le cadre d'un système d'aide à la marche arrière à guidage transversal automatisé ; le procédé (400) comprenant les étapes consistant :
- à déterminer (401), sur la base de données de référence relatives à une première marche avant du véhicule (100), une trajectoire de recul (311) pour une marche arrière d'une position finale (302) à une position initiale (301) ;
- à détecter (402) que le véhicule (100) en marche arrière quitte la trajectoire de recul (311) ; le guidage longitudinal du véhicule (100) lors de la marche arrière étant effectué au moins partiellement par un conducteur du véhicule (100) ; et
- à faire en sorte (403), en réaction à cette situation, que le véhicule (100) soit guidé, dans une deuxième marche avant, à une position de recul (304) qui permet de guider de nouveau le véhicule (100) à la position initiale (301) le long d'au moins une section de la trajectoire de recul (311).

10. Unité de commande (103) pour un système d'aide au conducteur d'un véhicule (100) à guidage transversal automatisé et/ou guidage longitudinal automatisé ; l'unité de commande (103) étant conçue
- pour déterminer, sur la base de données de référence relatives à une première marche de référence du véhicule (100), une trajectoire de marche (311) pour une nouvelle marche ;
- pour détecter que le véhicule (100) dans la nouvelle marche quitte la trajectoire de marche (311) ; le guidage longitudinal du véhicule (100) lors de la nouvelle marche étant effectué au moins partiellement par un conducteur du véhicule (100) ; et
- pour faire en sorte, en réaction à cette situation, que le véhicule (100) soit guidé, dans une marche de correction, à une position de correction (304) qui permet de guider de nouveau le véhicule (100) le long d'au moins une section de la trajectoire de marche (311).

11. Procédé pour guider un véhicule dans le cadre d'un système d'aide au conducteur à guidage transversal automatisé et/ou guidage longitudinal automatisé, le procédé comprenant les étapes consistant
- à déterminer, sur la base de données de référence relatives à une marche de référence du véhicule (100), une trajectoire de marche (311) pour une nouvelle marche ;
- à détecter que le véhicule (100) dans la nouvelle marche quitte la trajectoire de marche (311) ; le guidage longitudinal du véhicule (100) lors de la nouvelle marche étant effectué au moins partiellement par un conducteur du véhicule (100) ; et
- à faire en sorte, en réaction à cette situation, que le véhicule (100) soit guidé, dans une marche de correction, à une positon de correction (304) qui permet de guider de nouveau le véhicule (100) le long d'au moins une section de la trajectoire de marche (311) .
